Europäisches Patentamt

European Patent Office

Office européen des brevets

(11) Veröffentlichungsnummer: **0 085 920**
A2

## (12) EUROPÄISCHE PATENTANMELDUNG

(21) Anmeldenummer: 83100854.5

(22) Anmeldetag: 29.01.83

(51) Int. Cl.³: **B 60 R 7/06**

(30) Priorität: 05.02.82 DE 8203058 U

(43) Veröffentlichungstag der Anmeldung:
17.08.83 Patentblatt 83/33

(84) Benannte Vertragsstaaten:
AT CH DE FR GB IT LI NL

(71) Anmelder: Ryssel, Siegfried
Augsburger Strasse 17
D-8901 Mühlhausen(DE)

(72) Erfinder: Ryssel, Siegfried
Augsburger Strasse 17
D-8901 Mühlhausen(DE)

(74) Vertreter: Charrier, Rolf, Dipl.-Ing.
Postfach 260 Rehlingenstrasse 8
D-8900 Augsburg 31(DE)

(54) Ablagevorrichtung für Kleintransporter.

(57) Kleintransporter weisen meist eine Ablagemulde (1) auf, die zum Teil vom Armaturenbrett (6) übergriffen wird. Um die Ablagemöglichkeiten zu erhöhen wird in den Raum zwischen Ablagemulde (1) und Armaturenbrett (6) eine Ablagevorrichtung eingeschoben. Diese besteht aus einem oberen Ablagebrett (4) und einer unteren in die Ablagemulde (1) einpassenden Auflagevorrichtung (5), die rückseitig miteinander verbunden sind und bei der vorderseitig das Ablagebrett (4) über die Auflagevorrichtung (5) übersteht.

EP 0 085 920 A2

Fig. 2

Croydon Printing Company Ltd.

## Ablagevorrichtung für Kleintransporter

Die Erfindung betrifft eine Ablagevorrichtung für Kleintransporter mit einer Ablagemulde, die mindestens zum
Teil vom Armaturenbrett übergriffen wird.

Bei zahlreichen Kraftfahrzeugen ist unterhalb des Armaturenbretts zwischen den Vordersitzen eine Ablagemulde
vorgesehen. Bei Kleintransportern mit Frontmotor ragt
die Motorverkleidung zum Teil in das Fahrzeuginnere.
An ihrer Oberseite ist die vorgenannte Ablagemulde vorgesehen, die zum Teil vom Armaturenbrett übergriffen
wird. Bei Fahrzeugen mit einem Kardantunnel ist die Ablagemulde auf dem Kardantunnel angeordnet. Auch hier erstreckt sich die Ablagemulde in den Bereich unterhalb
des Armaturenbretts, wird also zum Teil von diesem übergriffen.

Die Ablagemöglichkeiten bei derartigen Ablagemulden sind
beschränkt. Es können nur relativ kleine Gegenstände dort
abgelegt werden. Bei Stößen oder einem scharfen Abbremsen des Fahrzeugs besteht die Gefahr, daß die in der Ablagemulde abgelegten Gegenstände aus dieser herausgeworfen
werden.

Als Zubehör sind zahlreiche Ablagevorrichtungen zum
nachträglichen Einbau in das Kraftfahrzeug bekannt.
Diese werden am oder unterhalb des Armaturenbretts mit
diesem verschraubt, wobei es bekannt ist, bei derartigen
Ablagevorrichtungen kreisförmige Ausschnitte vorzusehen,
in welche beispielsweise Kunststoffbecher eingesetzt
werden können. Es sind auch Ablagevorrichtungen in Form
eines Flaschenhalters bekannt. Daneben ist es bekannt,
am Armaturenbrett Klemmvorrichtungen anzubringen, um
beispielsweise Notizblöcke, Landkarten usw. festklemmen
zu können.

Die meisten dieser Ablagevorrichtungen weisen eine nur
geringe und meist einem bestimmten Zweck zugedachte Ablagekapazität auf. Wenn sie über die Kontur des Armaturenbretts überstehen oder sich im Bereich des Fußraumes des
Beifahrersitzes befinden, geht von ihnen auch eine Verletzungsgefahr aus.

Es besteht die Aufgabe, die Ablagevorrichtung so auszubilden, daß sie sich am Armaturenbrett organisch eingliedert, eine relativ große Ablagekapazität aufweist
und die Ablagemöglichkeit in der Ablagemulde nicht oder
nur wesentlich mindert.

Gelöst wird diese Aufgabe bei einer Ablagevorrichtung
der eingangs genannten Art mit den kennzeichnenden Merkmalen des Anspruches 1. Vorteilhafte Ausgestaltungen sind sind den Unteransprüchen entnehmbar.

Das wesentliche Merkmal der Erfindung besteht darin, daß
die Auflagevorrichtung, welche im vertikalen Abstand
zum Ablagebrett verläuft, in die Ablagemulde des Fahrzeugs einsetzbar ist und dieses Ablagebrett Ablagemöglichkeiten und eine Ablagekapazität aufweist, welche
diejenige der Ablagemulde bei weitem übersteigt.

Ein Ausführungsbeispiel wird nachfolgend anhand der
Zeichnung näher erläutert. Es zeigen:

    Fig. 1        eine Draufsicht auf die Ablagevorrichtung und

    Fig. 2        einen Schnitt längs der Linie
                  II-II in Fig. 1.

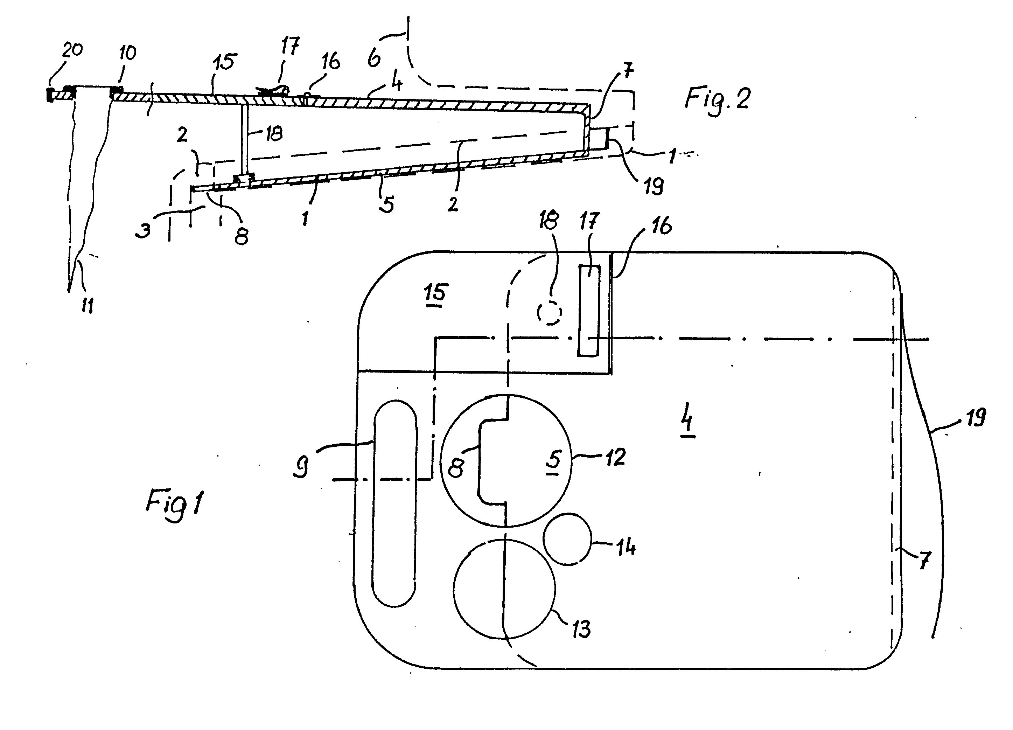

In Fig. 2 ist gestrichelt der Verlauf einer Ablagemulde
1 dargestellt, welche von einem wulstförmigen Rand 2 umfaßt wird. Ist die Ablagemulde 1 auf der Motorverkleidung
vorgesehen, dann weist der vordere wulstförmige Rand
mittig eine Ausnehmung 3 auf, welche den Zugang zu einem
Verschluß ermöglicht, bei dessen Lösen ein Teil der Motorhaubenverkleidung abnehmbar ist.

Die erfindungsgemäße Ablagevorrichtung besteht aus einem
oberen horizontalen Ablagebrett 4 und einer dazu im
vertikalen Abstand verlaufenden Auflagevorrichtung 5,
welche in die Ablagemulde 1 eingepaßt ist.

Die Ablagemulde 1 verläuft üblicherweise in den Bereich

8533/13                    - 4 -              27. Jan. 1983
ch-ws

unterhalb des Armaturenbretts 6. Die Ablagevorrichtung
nimmt im wesentlichen den Raum zwischen dieser Ablagemulde 1 und der Unterseite des Armaturenbretts 6 ein.

Im gezeigten Ausführungsbeispiel ist das Ablagebrett
4 verbunden mit der Auflagevorrichtung 5 über ein vertikales Wandlungsteil 7 am rechten Ende von Ablagebrett 4
und Auflagevorrichtung 5. Da die Ablagemulde 1 im gezeigten Ausführungsbeispiel schräg nach links unten verläuft,
verlaufen das Ablagebrett 4 und die Auflagevorrichtung 5
spitzwinkelig zueinander, damit der horizontale Verlauf
des Ablagebretts 4 gesichert ist.

Die Auflagevorrichtung 5 kann wie im gezeigten Ausführungsbeispiel brettartig ausgebildet sein. Es ist jedoch auch
möglich, die Auflagevorrichtung rahmenartig auszubilden,
derart, daß der Rand des Rahmens innerhalb des wulstförmigen Randes 2 verläuft.

In den Fällen, wo der vordere Rand 2 eine Griffmulde 3
aufweist, kann der vordere Rand der Auflagevorrichtung
mit einem entsprechenden Vorsprung 8 versehen sein,
welcher in die Griffmulde 3 einpaßt.

Das Ablagebrett 4 steht vorne über die Vorderkante der
Auflagevorrichtung 5 über. Längs der Vorderkante des
Ablagebretts 4 und vor der Vorderkante der Auflagevorrichtung 5 ist ein länglicher Ausschnitt vorgesehen. In
diesen länglichen Ausschnitt 9 ist eingesetzt ein Klemmrahmen 10, derart, daß zwischen dem Rand des Ausschnitts 9
und dem Klemmrahmen 10 der obere Rand eines Kunststoffbeutels 11 festgeklemmt werden kann, welcher zur Aufnahme von Abfällen dient.

Das Ablagebrett 4 weist weitere, bevorzugt kreisförmige
Ausschnitte 12, 13, 14 auf, welche mindestens teilweise
im Bereich der Auflagevorrichtung 5 und vor dem Armaturenbrett 6 angeordnet sind. In diese Ausschnitte 12, 13,
14 können verschiedene Gegenstände, wie beispielsweise
Dosen, Aschenbecher, Flaschen, Trinkbecher usw. eingesetzt werden. Sind diese von zylindrischer Form, sitzen
sie mit ihrer Unterseite am Rand 2 bzw. auf der Auflagevorrichtung 5 bzw. auf dem Boden der Ablagemulde 1 auf,
wenn die Auflagevorrichtung 5 als Rahmenteil ausgebildet
ist. Daneben können nicht dargestellte Mulden zur Ablage
von Kleingegenständen vorgesehen sein.

Ein Teil 15 des vorderen Bereichs des Ablagebretts 4
ist über ein Scharnier 16 nach oben klappbar mit dem
hinteren Bereich des Ablagebretts 4 verbunden. An der
Oberseite des nach oben klappbaren Teils 15 kann eine
Klemmvorrichtung 17 vorgesehen sein, welche zum Festklemmen von Notizzetteln usw. dient. An der Unterseite
des nach oben klappbaren Teils 15 ist ein Auflagefuß 18
vorgesehen, welcher im heruntergeklappten Zustand des
Teils 15 auf der Auflagevorrichtung 5 oder auf dem Boden der Ablagemulde 1 aufsteht, wenn die Auflagevorrichtung 5 als Rahmenteil ausgebildet ist. Zwischen
dem Fuß 15 und der Auflagevorrichtung 5 bzw. dem Boden
der Ablagemulde 1 kann beispielsweise eine Landkarte
festgehalten werden, welche sich dann im Blickfeld des
Fahrers befindet.

8533/13                    - 6 -                27. Jan. 1982
ch-ws

Wie aus Fig. 2 ersichtlich, ist die Länge der Auflagevorrichtung 5 geringer als die Tiefe der Ablagemulde 1.
Dies ist für den Fall vorgesehen, wo der Vorsprung 8 in
die Griffmulde 3 eingreift. Die Ablagevorrichtung wird
beim Einsetzen zuerst ganz nach hinten in die Ablagemulde 1 eingeschoben und dann nach vorne gezogen, derart,
daß der Vorsprung 8 in die Griffmulde 3 eingreift. Gegebenenfalls kann am Wandungsteil 7 eine Feder 19 vorgesehen sein, welche die Auflagevorrichtung in ihrer
dargestellten Lage hält. In den Fällen, wo keine Griffmulde 3 vorgesehen ist, kann die Länge der Auflagevorrichtung 5 der Tiefe der Ablagemulde 1 entsprechen.

Vorne und seitlich kann das Ablagebrett 4 einen elastischen Wulst 20 aufweisen.

Bei Fahrzeugtypen, bei denen das Armaturenbrett 6 nach
oben wegklappbar ist, liegt in Normallage des Armaturenbretts der untere horizontale Rand des Armaturenbretts
auf dem rechten Bereich des Ablagebretts 4 auf.

Die vorstehende Beschreibung hat auch Gültigkeit, wenn
die Ablagemulde 1 nicht auf der Motorverkleidung, sondern auf dem Kardantunnel angeordnet ist und zum Teil
von der Unterseite des Armaturenbretts 6 übergriffen
wird.

Der durch die Ablagemulde 1 gegebene Ablageraum wird
durch die Auflagevorrichtung 5 nur unwesentlich beeinträchtigt. Die Ablagevorrichtung ist zwischen der Ablagemulde 1 und dem unteren Rand des Armaturenbretts

8533/13                    - 7 -                    27. Jan. 1983

einwandfrei gesichert. Da die Ausschnitte 12, 13 und
14 ganz oder teilweise im Bereich der Ablagemulde 1
verlaufen, können dort auch Gegenstände eingesteckt
werden, deren Durchmesser kleiner ist als der Durchmesser des jeweiligen Ausschnitts 12,13 bzw. 14, da
diese Gegenstände unten aufsitzen.

An der Unterseite des Ablagebretts 4 oder an der Innenseite des Wandungsteils 7 kann eine Beleuchtungsvorrichtung vorgesehen sein.

Ansprüche

1. Ablagevorrichtung für Kleintransporter mit einer Ablagemulde, die mindestens zum Teil vom Armaturenbrett übergriffen wird, dadurch  g e k e n n -
z e i c h n e t ,  daß sie aus einem oberen horizontalen Ablagebrett (4) und einer rückseitig mit
dem Ablagebrett (4) verbundenen Auflagevorrichtung
(5) besteht, welche im vertikalen Abstand zum Ablagebrett (4) verläuft und in die Ablagemulde (1) einpaßt und vorderseitig das Ablagebrett (4) über die Auflagevorrichtung übersteht.

2. Ablagevorrichtung nach Anspruch 1, dadurch  g e -
k e n n z e i c h n e t ,  daß die Auflagevorrichtung
(5) brettartig ausgebildet ist.

3. Ablagevorrichtung nach Anspruch 1, dadurch  g e -
k e n n z e i c h n e t ,  daß die Auflagevorrichtung (5) rahmenartig ausgebildet ist.

4. Ablagevorrichtung nach einem der Ansprüche 1 bis 3,
dadurch  g e k e n n z e i c h n e t ,  daß das Ablagebrett (4) mit der Auflagevorrichtung (5) über
einen rückseitigen vertikalen Wandungsteil (7) verbunden ist.

5. Ablagevorrichtung nach einem der Ansprüche 1 bis 4,
   dadurch  g e k e n n z e i c h n e t ,  daß das
   Ablagebrett (4) mehrere Ausschnitte (12,13,14) aufweist, welche mindestens teilweise im Bereich über
   der Auflagevorrichtung (5) vorgesehen sind.

6. Ablagevorrichtung nach einem der Ansprüche 1 bis 5,
   dadurch  g e k e n n z e i c h n e t ,  daß ein
   längs der Vorderkante des Ablagebretts (4) und vor
   der Vorderkante der Auflagevorrichtung (5) verlaufender länglicher Ausschnitt (9) vorgesehen ist, in
   welchen ein Klemmrahmen (10) eingesetzt ist.

7. Ablagevorrichtung nach einem der Ansprüche 1 bis 6,
   dadurch  g e k e n n z e i c h n e t ,  daß ein
   Teil (15) des vorderen Bereichs des Ablagebretts (4)
   über ein Scharnier (16) nach oben klappbar mit dem
   hinteren Bereich des Ablagebretts (4) verbunden ist.

8. Ablagevorrichtung nach Anspruch 7, dadurch  g e -
   k e n n z e i c h n e t ,  daß der nach oben klappbare Bereich (15) des Ablagebretts (4) einen auf der
   Auflagevorrichtung (5) ruhenden Klemmfuß (18) aufweist.

9. Ablagevorrichtung nach einem der Ansprüche 1 bis 8,
   dadurch  g e k e n n z e i c h n e t ,  daß die Auflagevorrichtung (5) mittig einen Vorsprung (8) aufweist.

10. Ablagevorrichtung nach einem der Ansprüche 1 bis 9,
    dadurch  g e k e n n z e i c h n e t ,  daß rück-
    seitig am vertikalen Wandungsteil (7) eine Feder
    (19) vorgesehen ist.

Fig. 2

Fig 1

8533/13
0085920